# EUROPÄISCHE PATENTSCHRIFT

(11) **EP 2 559 929 B1**
(45) Veröffentlichungstag und Bekanntmachung des Hinweises auf die Patenterteilung: **28.05.2014**
(21) Anmeldenummer: 11006718.8
(22) Anmeldetag: 17.08.2011
(51) Int. Cl.: F16L 5/08, H02G 3/22, F16L 5/14

(54) **Leitungsdurchführung mit Prüfvolumen**
Conduit lead through with test volume
Traversée de conduite avec volume de contrôle

(43) Veröffentlichungstag der Anmeldung: 20.02.2013
(73) Patentinhaber: Hauff-Technik GmbH & Co. KG, 89542 Herbrechtingen (DE)
(72) Erfinder: Kurz, Ralf, 89537 Giengen (DE)
(74) Vertreter: Szynka, Dirk

(56) Entgegenhaltungen:
- EP-A1- 1 843 071
- WO-A1-2005/059421
- DE-A1- 10 150 075
- US-A- 5 235 138

## Beschreibung

Die vorliegende Erfindung betrifft eine Leitungsdurchführung zum abgedichteten Durchführen einer Leitung durch eine Wand mit einem Elastomerkörper und einer Spanneinrichtung zum Spannen des Elastomerkörpers.

Aus dem Stand der Technik sind etwa Leitungsdurchführungen bekannt, bei welchen ein Elastomerkörper zwischen zwei Spannplatten in der Richtung der Leitung (Leitungsrichtung) komprimiert wird und infolge dessen senkrecht zur Leitungsrichtung expandiert und sich dichtend sowohl an die Leitung als auch die Wand anlegt, also an eine Laibung der Wandöffnung. Dies ist jedoch nur eine von mehreren Möglichkeiten zur Montage des Elastomerkörpers, die das Anwendungsgebiet illustrieren, die vorliegende Erfindung jedoch nicht in ihrer Allgemeinheit einschränken soll.

Die EP 1 843 071 A1 zeigt eine solche Durchführung mit einem Elastomerkörper und beidseits davon angeordneten Spannplatten; insbesondere betrifft die Schrift einen Elastomerkörper, mit einer für die Leitung vorgesehenen Durchgangsöffnung, in welcher zur Anpassung an verschiedene Leitungsquerschnftie herausnehmbare Schalen vorgesehen sind.

Hinsichtlich der Dichtheit solcher Leitungsdurchführungen bestehen in der Praxis vielfach hohe Anforderungen, etwa wenn im Falle einer im Erdreich liegenden Außenwand eines Gebäudes die hindurchgeführte Leitung gegen Feuchtigkeit oder sogar drückendes Wasser gedichtet werden soll. Eine etwa infolge unsachgemäßer Montage nicht oder nicht hinreichend dichtende Leitungsdurchführung kann dann beispielsweise einen Feuchte- bzw. Wassereintritt mit unter Umständen erheblichen Folgeschäden und entsprechenden Kosten verursachen.

Die US 5,235,138 beschreibt Dichtstopfen zum Hindurchführen von Leitungen durch Druckwände eines Schiffs, wozu ein Elastomerkörper des Dichtstopfens axial ver spannt wird und sich infolgedessen dichtend an die Laibung der Schiffswand und die Leitung legt. Bei einer Ausführungsform ist ein druckbeaufschlagbarer Prüfraum vorgesehen, sodass der Dichtstopfen über einen die Schiffswand durchsetzenden Kanal druckbeaufschlagt und so auf Dichtigkeit getestet werden kann.

Auch die WO 2005/059421 A1 betrifft eine Dichtpackung mit einem Elastomerkörper, der eine hindurchgeführte Leitung gegen eine doppelwandige Tankwand dichtet und durch Druckbeaufschlagung auf Dichtigkeit getestet werden kann.

Die DE 101 50 075 A1 zeigt einen Elastomerkörper, der gemeinsam mit weiteren, baugleichen Elastomerkörpern modulartig in einen Rahmen gesetzt werden kann und gegen eine hindurchgeführte Leitung dichtet. In den Elastomerkörper ist außenseitig umlaufend eine Ausnehmung gefräst, die, um den Elastomerkörper auf Dichtigkeit zu testen, druckbeaufschlagt werden kann.

Der vorliegenden Erfindung liegt die Aufgabe zugrunde, eine Leitungsdurchführung mit verbesserter Anwendungssicherheit anzugeben, die in ökonomisch vorteilhafterweise hergestellt werden kann.

Erfindungsgemäß löst diese Aufgabe eine Leitungsdurchführung gemäß Anspruch 1.

Das Prüfvolumen liegt jedenfalls bezogen auf die Leitungsrichtung innerhalb des Elastomerkörpers und reicht in Bezug auf eine den Abstand zur Mittenachse der Leitung bestimmenden und im Folgenden als Abstandsrichtung bezeichneten Richtung bis nach Außen, also grenzt an eine in Abstandsrichtung außenliegende Dichtfläche des Elastomerkörpers und ist so beispielsweise für eine Dichtheitsprüfung dieser Außendichtfläche vorgesehen. Erfindungsgemäß, kann mit einem an die Dichtfläche des Elastomerkörpers zur Leitung hin grenzenden Prüfvolumen auch die dichte Anlage des Elastomerkörpers an der Leitung überprüft werden.

Unabhängig von der im Einzelnen zu prüfenden Dichtfläche ist bei einer erfindungsgemäßen Leitungsdurchführung das Prüfvolumen im Inneren des Elastomerkörpers angeordnet, ist dieses also ein integraler Bestandteil der montier ten Leitungsdurchführung. Dabei liegt das Prüfvolumen von gegebenenfalls einzelnen den Elastomerkörper bzw. ein Elastomerkörperteil durchsetzenden Durchgangsöffnungen, etwa einer im Rahmen der bevorzugten Ausführungsformen noch näher erläuterten Zuführung, abgesehen in Bezug auf die Leitungsrichtung innerhalb des Elastomerkörpers, schließt an das Prüfvolumen also in Leitungsrichtung in beiden Richtungen Elastomerkörper an.

Für den anderen Fall, also ein in Leitungsrichtung außerhalb des Elastomerkörpers angeordnetes Prüfvolumen, hat der Erfinder nämlich festgestellt, dass das Bereitstellen, also Abdichten eines solchen Prüfvolumens, erheblichen Aufwand bedeuten kann - im Falle des vorstehend genannten Kellerraums müsste entweder dieser abgedichtet und druckbeaufschlagt werden oder es müsste vorübergehend eine zweite Leitungsdurchführung eingesetzt werden, was arbeitsintensiv ist und auch im Hinblick auf den Platzbedarf problematisch sein kann. Zudem hat das erfindungsgemäß in den Elastomerkörper integrierte Prüfvolumen den Vorteil, dass eine Dichtheitsprüfung beispielsweise nicht nur im Anschluss an die Montage vorgenommen werden kann, sondern auch im Nachgang dazu möglich ist, etwa im Rahmen einer regelmäßigen Wartung.

Ein im Inneren des Elastomerkörpers angeordnetes Prüfvolumen ließe sich zwar auch ohne einen erfindungsgemäßen angrenzenden Abstandshalter realisieren, beispielsweise indem das Prüfvolumen eingefräst wird. Der Erfinder hat jedoch herausgefunden, dass dies zeitaufwandig und insofern hinsichtlich einer ökonomischen Fertigung der Leitungsdurchführung nachteilig sein kann. Aus diesem Grund wird im Rahmen der vorliegenden Erfindung ein im verspannten Elastomerkörper das Prüfvolumen freihaltender Abstandshalter vorgesehen, der an den Elastomerkörper grenzt.

In einer besonders vorteilhaften und deshalb auch im Rahmen der abhängigen Ansprüche noch weiter im Detail erläuterten Ausgestaltung ist der Elastomerkörper zweigeteilt und werden die beiden Elastomerkörperteile dann durch den Abstandshalter in Leitungsrichtung zueinander beabstandet. Der Abstandshalter kann dabei beispielsweise fest mit einem oder auch beiden Elastomerkörperteilen verbunden sein, etwa durch eine Fügeverbindung, insbesondere eine Klebeverbindung, oder auch lediglich an den Elastomerkörperteilen anliegen.

Ein entsprechendes durch In-Anlage-Bringen von Elastomerkörper und Abstandshalter herstellbares Prüfvolumen ist gegenüber einem eingefrästen Prüfvolumen vorteilhaft, weil entsprechend aufwändige und insofern insbesondere in einer Massenfertigung nachteilige Frässchritte entfallen. Eine erfindungsgemäße Leitungsdurchführung kann im einfachsten Fall hingegen hergestellt werden, indem ein Elastomerper mit einer schräg zur Leitungsrichtung (vorzugsweise senkrecht dazu) orientierten Trennfläche zweigeteilt wird (oder zwei entsprechende Tell hergestellt werden) und dann ein Abstandshalter zwischen den Elastomerkörperteilen vorgesehen wird. Der Gegenstand der vorliegenden Erfindung beschränkt sich jedoch nicht hierauf, sodass der Abstandshalter beispielsweise auch einstückig mit einem Elastomerkörperteil ausgebildet sein könnte und entsprechend nur an das andere Elastomerkörperteil grenzen würde.

An den Elastomerkörper "grenzend" meint also an diesem anliegend, jedoch in der Anlagefläche nicht einstückig damit ausgebildet seiend - im Gesamten könnte ein erfindungsgemäßer Elastomerkörper durchaus auch einstückig ausgebildet sein, etwa im Falle eines spritzgegossenen oder generell in einem formenden Verfahren hergestellten Elastomerkörpers, dessen das Prüfvolumen zwischen sich einschließende Elastomerkörperteile durch einen beispielsweise zum Einspritzen des Elastomermaterials vorgesehenen Kanal miteinander verbunden sind. Der Abstandshalter könnte bei diesem Beispiel an einen Elastomerkörperbereich angeformt sein und nach dem Zusammensetzen, also nach einem entsprechenden Biegen des von Anfang an einstückigen Elastomerkörpers, an dem anderen Elastomerkörperbereich anliegen.

Sofern Im Kontext der vorliegenden Offenbarung auf die Leitungsrichtung bzw. einen Abstand zu deren Mittenachse, also die Abstandsrichtung, Bezug genommen wird, impliziert dies nicht, dass zur Erfüllung des Gegenstands auch tatsächlich bereits eine Leitung hinduchgeführt sein muss; vielmehr wird eine geometrische Anordnung beschrieben, als ob eine Leitung hindurchgeführt wäre.

Die dichte Anlage an eine dann hindurchgeführte Leitung wird durch das Verspannen des Elastomerkörpers mit der Spanneinrichtung erreicht, wobei ein Betätigen der Spanneinrichtung die bezogen auf die Leitungsrichtung beidseits des Prüfvolumens angeordneten Bereiche des Elastomerkörpers verformt, also beidseits des Prüfvolumens eine dichtende Anlage des Elastomerkörpers an die Leitung bewirkt. Im Falle eines zuvor beschriebenen Elastomerkörpers mit zwei durch den Abstandshalter beabstandeten Elastomerkörperteilen verformt die Spanneinrichtung also beide Elastomerkörperteile.

Es kann beispielsweise eine den Elastomerkörper in Abstandsrichtung komprimierende Spanneinrichtung vorgesehen sein oder auch eine den Elastomerkörper in Leitungsrichtung komprimierende und so dessen Expansion in Abstandsrichtung bewirkende Spanneinrichtung. Im erstgenannten Fall kann der Elastomerkörper beispielsweise auch zusammen mit weiteren Elastomerkörpern von einer gemeinsamen Spanneinrichtung verspannt werden. Solche Elastomerkörper könnten etwa in Leitungsrichtung gesehen eine rechteckige Außenform aufweisen, wobei die Seitenflächen der Mehrzahl Elastomerkörper dann aneinander bzw. an der Laibung einer Wandöffnung anliegen könnten.

Im Allgemeinen kann der Ventilkörper beispielsweise auch unabhängig von der Leitungsdurchführung vertrieben und dann erst bei deren Montage an- bzw. eingesetzt werden. Bevorzugt ist jedoch ein als Bestandteil der Leitungsdurchführung vorgesehener Ventilkörper, etwa ein im Rahmen der abhängigen Ansprüche noch näher erläuterter, an einer Spannplatte befestigbarer Ventilkörper.

Die Erfindung wird im Folgenden weiter anhand bevorzugter Ausgestaltungen erläutert, wobei die Offenbarung nicht als auf eine bestimmte Kategorie beschränkt zu verstehen ist, sondem sich implizit sowohl auf die Leitungsdurchführung als auch auf deren Herstellung bzw. Verwendung bezieht.

Gemäß der Erfindung ist der Elastomerkörper dazu ausgelegt, sich Infolge des Verspannens an eine Laibung der Wandöffnung so anzulegen, dass die Laibung der Wandöffnung das Prüfvolumen begrenzt. "Laibung" meint allgemein eine die Durchgangsöffnung in Abstandsrichtung begrenzende, vorzugsweise umlaufende Fläche und kann beispielsweise auch von einem in die Wandöffnung eingesetzten, etwa mit der Wand verschraubten, Rahmen gebildet sein. Besonders bevorzugt entspricht die Laibung der Innenmantelfläche eines in die Wand eingesetzten, beispielsweise einbetonierten, Futterrohres oder der Wandung einer in die Wand eingebrachten Kernbohrung.

Jedenfalls begrenzt ein Bereich der Laibung dann das Dichtvolumen, und zwar vorzugsweise umlaufend, sodass das Prüfvolumen an zwei in Leitungsrichtung zueinander beabstandete, zur Laibung hin ausgebildete Dichtflächen des Elastomerkörpers grenzt. Dementsprechend kann durch eine Druckbeaufschlagung des Prüfvolumens die dichtende Anlage des Elastomerkörpers an der Laibung der Wandöffnung, also die korrekte Ausbildung der in Abstandsrichtung außenseitig am Elastomerkörper angeordneten, vorzugsweise umlaufenden Dichtflächen überprüft werden.

Die Laibung der Wandöffnung begrenzt das Prüfvolumen gemeinsam mit der Leitung, sodass durch Druckbeaufschlagung eines einzigen, zusammenhängenden Prüfvolumens die dichtende Anlage des Elastomerkörpers an sowohl der Leitung als auch der Laibung überprüft werden kann.

Bei einer weiteren Ausführungsform ist der Elastomerkörper in Bezug auf die Leitungsrichtung aus mindestens zwei für sich einstückigen Elastomerkörperteilen aufgebaut und sind diese dazu ausgelegt, zwischen sich zumindest einen Bereich des Prüfvolumens einzuschließen. Besonders bevorzugt sind bezogen auf die Leitungsrichtung genau zwei einstückige Elastomerkörperteile vorgesehen, schließt also an ein das Prüfvolumen begrenzendes Elastomerkörpertell an der dem Prüfvolumen entgegengesetzten Seite kein weiteres an. Die Leitungsdurchführung kann so trotz des im Inneren vorgesehenen Prüfvolumens in Bezug auf die Leitungsrichtung kompakt gebaut werden.

Hierbei betrifft die Einstückigkeit der Elastomerkörperteile zunächst die Leitungsrichtung, können also beispielsweise dieselbe Leitung berührende Segmente eines Elastomerkörperteils auch durchaus durch zur Leitungsrichtung parallele Trennflächen voneinander getrennt sein; vorzugsweise ist ein Elastomerkörperteil jedoch insgesamt einstückig ausgebildet, also gegebenenfalls auch trotz einer zur Leitungsrichtung parallelen Trennfläche in sich zusammenhängend.

In weiterer Ausgestaltung ist bei einem solchen aus mindestens zwei für sich einstückigen Elastomerkörperteilen aufgebauten Elastomerkörper für den Abstandshalter ein anderes Material als für den Elastomerkörper vorgesehen, beispielsweise ein Hartkunststoffmaterial oder ein metallisches Material, etwa eine Legierung. Hier ist also ein im Gegensatz zum Elastomerkörper auf eine Krafteinwirkung verformungsarm reagierendes Material vorteilhaft, weil ein entsprechender Abstandshalter dann weitgehend unabhängig vom Verformungszustand des Elastomerkörpers das Prüfvolumen freihält, jedenfalls soweit der Elastomerkörper das Prüfvolumen nicht (wesentlich) begrenzt. Durch einen entsprechend verformungsarmen Abstandshalter wird somit für das Prüfvolumen eine Mindestweite in Leitungsrichtung vorgegeben, sodass auch im Falle eines stärker verspannten Elastomerkörpers ein an die zu prüfenden Dichtflächen grenzendes Prüfvolumen freigehalten wird.

Der Abstandshalter ist als sich quer zur Leitungsrichtung, vorzugsweise senkrecht dazu, erstreckende Zwischenplatte mit einer die Leitung berücksichtigenden Durchgangsöffnung ausgelegt. Im Falle einer Leitungsdurchführung mit beispielsweise beidseits des Elastomerkörpers angeordneten und zum Zwecke des Verspannens aufeinander zubewegten Spannplatten kann die Zwischenplatte etwa im Wesentlichen einer Spannplatte entsprechend gestaltet sein, was die Anzahl unterschiedlicher Komponenten und somit den Fertigungsaufwand reduzieren helfen kann. "Platte" meint hierbei einen Körper, dessen Ausdehnung in Abstandsrichtung größer als jene in Leitungsrichtung ist.

Neben der die Leitung berücksichtigenden Durchgangsöffnung ist in der Zwischenplatte eine Trennfuge vorgesehen, die einen von der Leitung begrenzten Bereich des Prüfvolumens druckfluidisch mit einem von der Laibung der Wandöffnung begrenzten Bereich davon verbindet. Eine solche Trennfuge wird in der Zwischenplatte in Verbindung mit einem Elastomerkörper vorgesehen, in dem sich eine in Leitungsrichtung orientierte, vorzugsweise dazu parallele, Trennfläche von der Leitung weg nach außen bis zu einer Außenfläche des Elastomerkörpers erstreckt. Ein entsprechender Elastomerkörper ist dann um eine in Leitungsrichtung orientierte Schwenkachse aufklappbar, kann also auch auf eine bereits verlegte Leitung gesetzt werden.

Indem im erfindungsgemäßen Falle eines in Leitungsrichtung verspannten Elastomerkörpers zum Vierspannen beidseits davon vorgesehene Spannplatten den Trennflächen im Elastomerkörper entsprechend geteilt ausgeführt sind, kann die Leitungsdurchführung ohne Demontage der Spannplatten, also etwa mit am Elastomerkörper anliegenden Spannplatten und Elastomerkörper sowie Spannplatten durchsetzenden Spannbolzen, auf eine bereits verlegte Leitung gesetzt werden. Erfindungsgemäß sind auch in der Zwischenplatte den Trennflächen im Elastomerkörper entsprechende Trennfugen vorgesehen. Entsprechende Trennfugen können im Falle eines für eine Mehrzahl Leitungen vorgesehenen Elastomerkörpers gleichzeitig die um die jeweiligen Leitungen angeordneten Bereiche des Prüfvolumens miteinander verbinden, sodass dieses im Idealfall mit nur einem Ventilkörper druckbeaufschlagt werden kann.

Bei einer weiteren Ausführungsform weist der Abstandshalter eine Hülse auf, die auf einen den Elastomerkörper durchsetzenden Spannbolzen, der zum Zwecke des Verspannens mit einer Spannplatte zusammenwirkt, gesetzt ist. Die Hülse ist bevorzugt als länglicher Körper ausgebildet, hat also eine in Leitungsrichtung genommene Länge, die mindestens ihrem Außendurchmesser (im Falle eines nicht kreisförmigen Querschnitts dem Mittelwert aus kleinster und größter Ausdehnung) entspricht, besonders bevorzugt mindestens dem Doppelten davon. Durch die Wahl der Hülsenlänge kann die Ausdehnung des Prüfvolumens in Leitungsrichtung angepasst werden, sodass das Prüfvolumen also beispielsweise für einen Satz Leitungsdurchführungen unterschiedlichen Durchmessers konstant gehalten werden.

Die Hülse ist vorzugsweise als rohrförmiger Körper ausgestaltet, wobei zur Kraftübertragung auf den Elastomerkörper idealerweise eine Anlagefläche vorgesehen ist, die größer als die Fläche der Hülse (üblicherweise eine Ringfläche) in einer zur Leitungsrichtung senkrechten, bezogen auf die Leitungsrichtung mittig liegenden Schnittebene ist. Die Hülse kann also beispielsweise endseitig aufgeweitet sein, also mit einem Flansch an dem Elastomerkörper anliegen. Besonders bevorzugt grenzt die Hülse zur Vergrößerung der Anlagefläche an eine Anlageplatte, sodass die Kombination aus Hülse und Anlageplatte das Prüfvolumen freihält. Etwa im Hinblick auf eine gewisse Stabilität der Leitungsdurchführung auch im nicht verspannten Zustand, also beispielsweise hinsichtlich einer Verwindungssteifigkeit gegen Torsion, kann die Hülse auch an der Spannplatte befestigt sein, also beispielsweise mit einem sich endseitig verjüngenden Abschnitt eingesteckt oder auch eingeschraubt werden.

Eine weitere Ausführungsform betrifft eine Kombination aus Spannplatte und Ventilkörper, wobei der Ventilkörper an der Spannplatte befestigbar ist und so gemeinsam mit der Spannplatte an den Elastomerkörper angesetzt werden kann. Die Spannplatte ist dazu ausgelegt, den Elastomerkörper in Leitungsrichtung zu komprimieren, etwa in zuvor beschriebener Weise zusammenwirkend mit einer weiteren Spannplatte und Spannbolzen, sodass der Elastomerkörper infolge der Kompression senkrecht zur Leitungsrichtung expandiert und sich dichtend an die Leitung und vorzugsweise eine Laibung der Wandöffnung anlegt.

An dem an der Spannplatte befestigbaren Ventilkörper kann beispielsweise ein Außengewinde vorgesehen sein, das in ein entsprechendes in einer Durchgangsöffnung in der Spannplatte vorgesehenes Gewinde eingeschraubt werden kann. Der Ventilkörper kann jedoch auch allein durch eine Steckverbindung an der Spannplatte befestigt und beispielsweise verrastet oder mit einem Sprengring gesichert werden; ein von der dann an dem Elastomerkörper anliegenden Seite her eingeschobener Ventilkörper kann beispielsweise auch allein mit einem Flansch an der Spannplatte anliegend dann durch den Druck des Elastomerkörpers gesichert sein.

Unabhängig von der individuellen Ausgestaltung der Verbindung zwischen Ventilkörper und Spannplatte kann diese Ausführungsform beispielsweise den Vorteil bieten, dass die Leitungsdurchführung gleich mit Ventilkörper als integralem Bestandteil davon vertrieben werden kann. Da für die Spannplatte typischerweise ein steifes Material vorgesehen Ist, etwa ein metallisches Material, kann ein ebenfalls steifer und typischerweise auch aus einem metallischen Material vorgesehener Ventilkörper auch gut daran befestigt bzw. sicher in Position gehalten werden.

Wenngleich Spannplatte und Ventilkörper gemeinsam an den Elastomerkörper angesetzt werden können, soll der Erfindungsgegenstand auch verwirklicht sein, wenn zuerst die Spannplatte an den Elastomerkörper angesetzt und dann der Ventilkörper an der Spannplatte befestigt wird; entscheidend ist, dass der Ventilkörper jedenfalls nicht ausschließlich über den Elastomerkörper an der Spannplatte befestigt wird, sondern Ventilkörper und Spannplatte aneinander anliegend befestigt werden.

Ein an der Spannplatte befestigter bzw. befestigbarer Ventilkörper muss sich nicht zwingend, was anderenfalls zu Befestigungszwecken vorgesehen sein könnte, in Leitungsrichtung in den Elastomerkörper hinein erstrecken, sondern kann bezogen auf die Leitungsrichtung kompakt gebaut werden. Bevorzugt ist daher ein Ventilkörper, der sich in dem Elastomerkörper über höchstens 50 %, in dieser Reihenfolge zunehmend bevorzugt höchstens 40 %, 30 %, 20 %, 10 %, des Abstands zwischen Spannplatte und Prüfvolumen erstreckt; besonders bevorzugt reicht der Ventilkörper nicht in den Elastomerkörper hinein, sondern liegt allenfalls daran an.

Die Erfindung betrifft auch ein Verfahren zur Herstellung einer Leitungsdurchführung, wobei ein Elastomerkörper vorgesehen und ein Abstandshalter an diesen angesetzt wird; das Ansetzen des Abstandshalters kann vor, nach oder auch gleichzeitig mit dem Ansetzen der Spanneinrichtung erfolgen. Abstandshalter und Elastomerkörper grenzen jedenfalls im Zeitpunkt der Herstellung aneinander, können jedoch anschließend auch zu einem einstückigen Körper verbunden werden, etwa indem ein zunächst noch an den Elastomerkörper grenzender Abstandshalter aus Elastomerkörpermaterial durch Vulkanisieren der Grenzfläche einstückig mit dem Elastomerkörper ausgebildet wird.

Die Erfindung richtet sich auch auf die Verwendung einer entsprechenden Leitungsdurchführung zum Abdichten einer Strom-, Gas-, Wasser- Wärme-, Telekommunikations-, Signal- oder Datenleitung in einer Gebäudewand, Schiffswand oder Gehäusewand.

Dabei erfolgt die Montage der Leitungsdurchführung, also das Einsetzen und Verspannen, vorzugsweise von nur einer Seite der Wand aus und wird auch die Druckbeaufschlagung von derselben Seite der Wand aus vorgenommen. Die andere Seite der Wand muss also vorteilhafterweise nicht zwingend zugänglich sein, sondern kann beispielsweise mit Erdreich bedeckt bleiben. Im Falle einer vorstehend beschriebenen Leitungsdurchführung mit durch Trennflächen geteiltem Elastomerkör per kann die Leitungsdurchführung beispielsweise auf einer Seite der Wand auf die Leitung gesetzt und von derselben Selte der Wand aus in die Durchgangsöffnung eingeschoben, verspannt und durch Druckbeaufschlagung auf Dichtigkeit geprüft werden.

Im Folgenden wird die Erfindung anhand eines Ausführungsbeispiels näher enäutett
- Figur 1: zeigt eine erfindungsgemäße Leitungsdurchführung mit Prüfvolumen in einer die Leitungsrichtung enthaltenden Schnittebene.
- Figur 2: veranschaulicht eine Leitungsdurchführung gemäß Figur 1 in einer Aufsicht in Leitungsrichtung blickend.
- Die Figuren 3 bis 7: zeigen jeweils in Aufsicht die einzelnen Komponenten einer Leitungsdurchführung gemäß den Figuren 1 und 2, also Spannplatten, Elastomerkörperteile und eine Zwischenplatte.

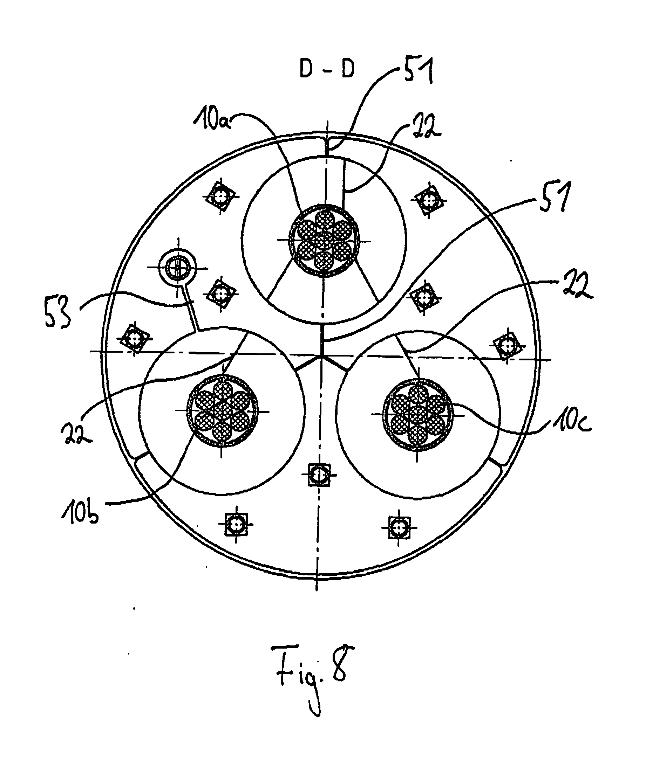

- Figur 8: illustriert einen Schnitt durch die Leitungsdurchführung gemäß den Figuren 1 und 2, und zwar in einer senkrecht zur Leitungsrichtung orientierten, in der Zwischenplatte liegenden Schnittebene.
- Figur 9: zeigt in einer die Leitungsrichtung enthaltenden Schnittebene eine Leitungsdurchführung, deren Prüfvolumen mit auf die Spannbolzen gesetzten Hülsen vergrößert ist.
- Figur 10: veranschaulicht die Leitungsdurchführung gemäß Figur 9 in einer zur Leitungsrichtung senkrechten Schnittebene.

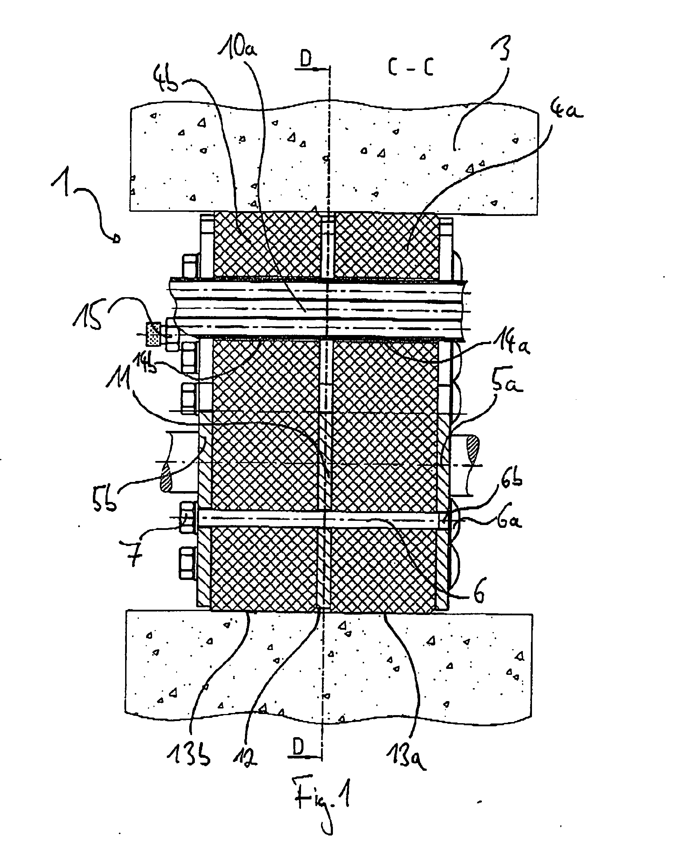

Figur 1 zeigt eine erfindungsgemäße Leitungsdurchführung 1 in einer Schnittdarstellung mit einer die Leitungsrichtung 2 enthaltenden, in der Zeichenebene liegenden Schnittebene. Die Leitungsdurchführung 1 ist in eine In einer Wand 3 vorgesehene Kernbohrung gesetzt und darin verspannt. Dazu ist der Elastomerkörper 4 in Leitungsrichtung 2 komprimiert, und zwar indem beidseits des Elastomerkörpers 4 angeordnete Spannplatten 5 durch Anziehen von Spannbolzen 6 gegeneinander verspannt sind. Die sowohl den Elastomerkörper 4 als auch die Spannplatten 5 durchsetzenden Spannbolzen 6 sind als Schlossschrauben mit Linsenkopf 6a und in die eine Spannplatte 5a greifenden Vierkant 6b ausgebildet und dementsprechend beim Anziehen der Mutter 7 gegen ein Verdrehen gesichert.

Der Elastomerkörper 4 expandiert infolge der Kompression in Leitungsrichtung 2 senkrecht dazu, also in Abstandsrichtung 8, und legt sich so dichtend an eine Laibung 9 der Öffnung in der Wand 3 und eine Leitung 10 an. Die Leitung 10 ist in diesem Fall ein mehrpoliges Kabel.

Der Elastomerkörper 4 ist zweigeteilt ausgeführt, wobei die beiden für sich einstückigen Elastomerkörperteile 4a, b durch eine Zwischenplatte 11 zueinander beabstandet sind. Die Zwischenplatte 11 reicht weder bis an die Laibung 9 der Wandöffnung noch bis an die Leitung 10 heran, sodass zwischen den Elastomerkörperteilen 4a, b ein von Laibung 9 und Leitung 10 begrenztes Prüfvolumen 12 freigehalten wird. Die Zwischenplatte 11 ist ebenso wie Spannplatten 5 und Spannbolzen 6 aus Metall vorgesehen und beabstandet an die Elastomerkörperteile 4a, b grenzend diese zueinander.

Das Prüfvolumen 12 grenzt also einerseits an eine außenseitig umlaufende Dichtfläche 13 des Elastomerkörpers 4 zur Laibung 9 der Wandöffnung hin und andererseits an eine Dichtfläche 14 des Elastomerkörpers zur Leitung 10 hin Beide Dichtflächen 13, 14 sind bezogen auf die Leitungsrichtung 2 zweigeteilt, also durch das Prüfvolumen 12 unterbrochen. Insofern grenzt das Prüfvolumen 12 sowohl zur Lalbung 9 als auch zur Leitung 10 hin an jeweils 2 Dichtflächen 13a, b und 14a, b, die jeweils von einem Elastomerkörperteil 4a, b gebildet sind. Das Prüfvolumen 12 ist somit bezogen auf die Leitungsrichtung 2 innerhalb des Elastomerkörpers 4 angeordnet.

Das Prüfvolumen 12 kann über einen in der Spannplatte 5b sitzenden Ventilkörper 15 druckbeaufschlagt werden, sodass die Dichtflächen 13a, b und 14a, b auf Dichtigkeit geprüft werden können. Der Ventilkörper 15 kann im einfachsten Fall ein in die Spannplatte 5b eingeschraubtes Autoventil sein und die Dichtheitsprüfung dann mit einer Luftpumpe mit Manometer vorgenommen werden.

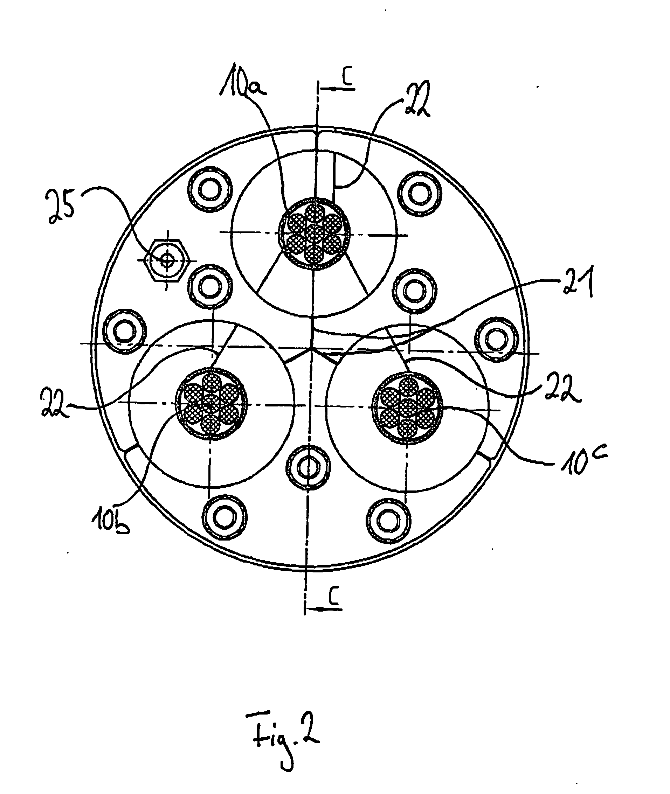

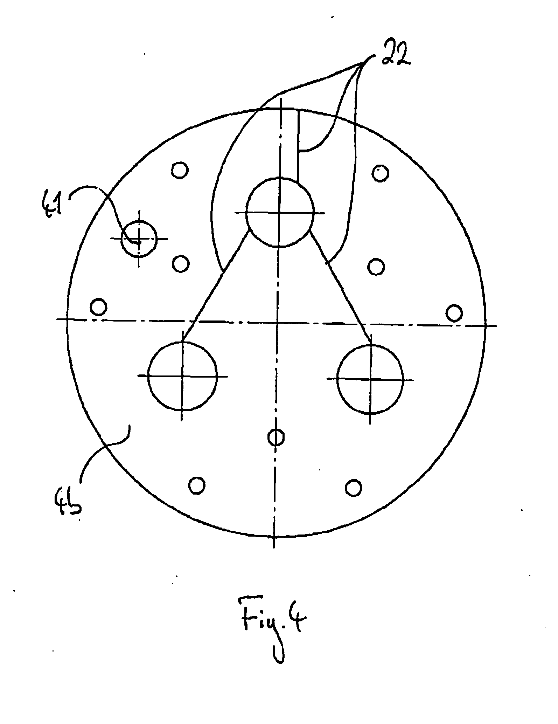

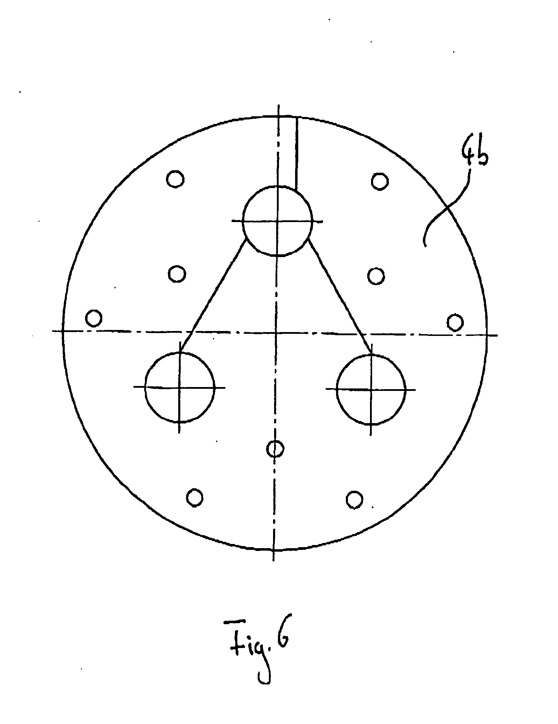

Die Leitungsdurchführung 1 ist in Figur 2 in Leitungsrichtung 2 blickend in einer Aufsicht dargestellt. Neben der auch in Figur 1 im Schnitt gezeigten Leitung 10a sind hier zwei weitere Leitungen 10b, c zu erkennen. Die Spannplatte 5b ist durch Trennfugen 21 geteilt ausgeführt, kann also gemeinsam mit dem durch Trennfugen 22 unterteilten Elastomerkörper 4 (vergleiche Figuren 4 und 6) aufgeklappt und so auch auf bereits verlegte Leitungen 10a, b, c gesetzt werden.

Die Trennfugen 21 entsprechen insofern den Trennflächen 22, als dass jeweils ein Spannplattenteil mit einem durch die Trennfläche bzw. -flächen 22 vom übrigen Elastomerkörperteil 4a, b getrennten, jedoch noch immer mit dem übrigen Elastomerkörperteil 4a, b zusammenhängenden Bereich des Elastomerkörperteils 4a, b bewegt werden kann. Im montierten Zustand decken sich die Trennfugen 21 indessen nicht mit den Trennflächen 22, sondern werden die Trennflächen 22 soweit möglich von einem durchgehenden Spannplattenteil bedeckt.

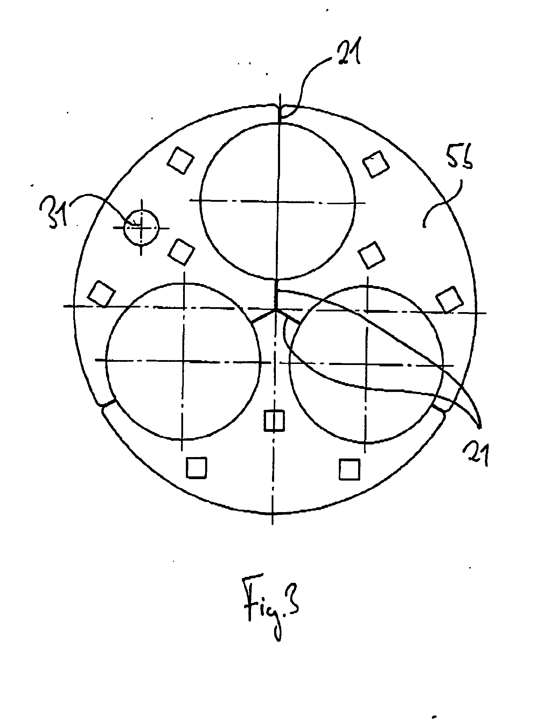

Die Figuren 3 bis 7 zeigen einzelne Komponenten der Leitungsdurchführung 1 gemäß den Figuren 1 und 2, und zwar bezogen auf Figur 1 in einer Abfolge von links nach rechts, also dementsprechend in Figur 3 mit der Spannplatte 5b beginnend.

Zwischen den einzelnen Spannplattenteilen sind wiederum die Trennfugen 21 zu erkennen. Neben den drei runden Durchgangsöffnungen für die Leitungen 10a, b, c und rechteckigen Durchgangsöffnungen für die Spannbolzen 6 ist eine weitere Durchgangsöffnung 31 vorgesehen, in die der Ventilkörper 15 in einer für PKW Ventile bekannten Weise eingezogen wird.

Figur 4 zeigt ein erstes, bei zusammengebauter Leitungsdurchführung 1 dann an die Spannplatte 5b grenzendes Elastomerkörperteil 4b. Neben dem für die Leitungen 10a, b, c sowie den für die Spannbolzen 6 vorgesehenen Durchgangsöffnungen ist eine weitere Durchgangsöffnung 41 zu erkennen, die dann das Prüfvolumen 12 druckfluidisch mit dem Ventilkörper 31 verbindet.

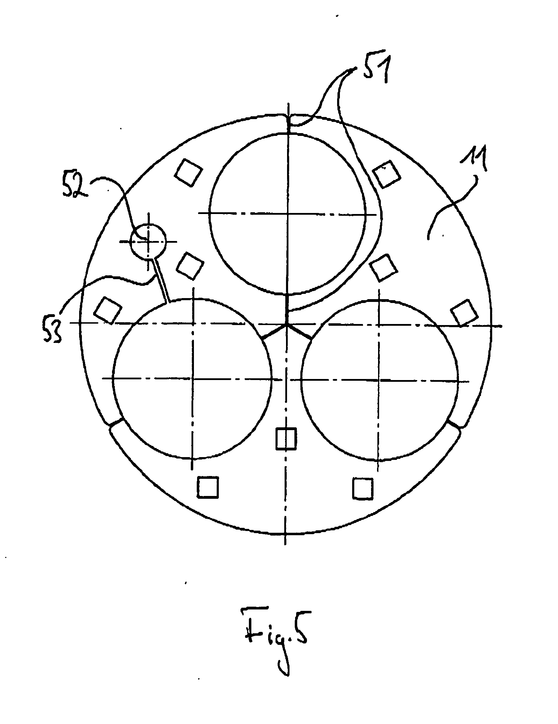

Das Prüfvolumen 12 wird durch die in Figur 5 gezeigte, zwischen den Elastomerkörperteilen 4a, b vorgesehene Zwischenplatte 11 geschaffen. Die Zwischenplatte 11 ist analog zu den Spannplatten 5a, b durch Trennfugen 51 in Zwischenplattentelle unterteilt. Ferner sind gleichermaßen Durchgangsöffnungen für die Leitungen 10a, b, c und die Spannbolzen 6 vorgesehen. In einem Zwischenplattenteil ist zusätzlich eine Durchgangsöffnung 52 eingebracht, und zwar dort, wo die im Elastomerkörperteil 4b vorgesehene Durchgangsöffnung 41 mündet.

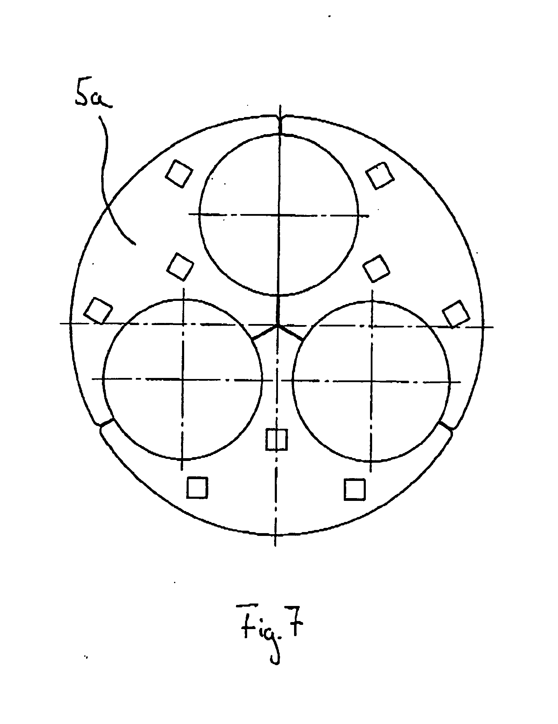

Die Durchgangsöffnung 52 ist in der zusammengesetzten Leitungsdurchführung 1, also bei beidseits der Zwischenplatte 11 anliegenden Elastomerkörperteilen 4a, b, dann über eine Fuge 53 druckfludisch mit einem bei der Leitung 10b angeordneten ringförmigen Bereich des Prüfvolumens verbunden. Dieser ringförmige Bereich ist ferner über die Trennfugen 51 mit um die Leitungen 10a, c angeordneten ringförmigen Bereichen des Prüfvolumens 12 verbunden. Schließlich sind diese drei bei den Leitungen 10a, b, c angeordneten Bereiche mit einem ebenfalls ringförmigen, jedoch von der Laibung 9 der Wandöffnung begrenzten, also außenseitig umlaufenden Bereich des Prüfvolumens 12 druckfluidisch verbunden, und zwar ebenfalls über die Trennfugen 51. Die Trennfugen 51 dienen also einerseits der Aufklappbarkeit der Leitungsdurchführung 1 und verbinden andererseits vorteilhafterweise verschiedene Bereiche des Prüfvolumens 12 druckfluidisch miteinander, sodass die einzelnen Bereiche über nur einen einzigen Ventilkörper 15 druckbeaufschlagt werden können. Das in Figur 6 gezeigte Elastomerkörperteil 4a entspricht dem Elastomerkörperteil 4b, abgesehen von der hier nicht vorhandenen Durchgangsöffnung 41. Gleichermaßen entspricht die in Figur 7 illustrierte Spannplatte 5a von der hier nicht eingebrachten Durchgangsöffnung 31 abgesehen jener aus Figur 3. Die Spannplatten 5a, b und auch die Zwischenplatte 11 sind also bis auf kleine Anpassungen weitgehend analog aufgebaut, was in Fertigungshinsicht vorteilhaft ist. Gleiches gilt für die Elastomerkörperteile 4a, b, weil das Elastomerkörperteil 4b durch Einbringen der Durchgangsöffnung 41 aus demselben Grundkörper wie das Elastomerkörperteil 4a hergestellt werden kann.

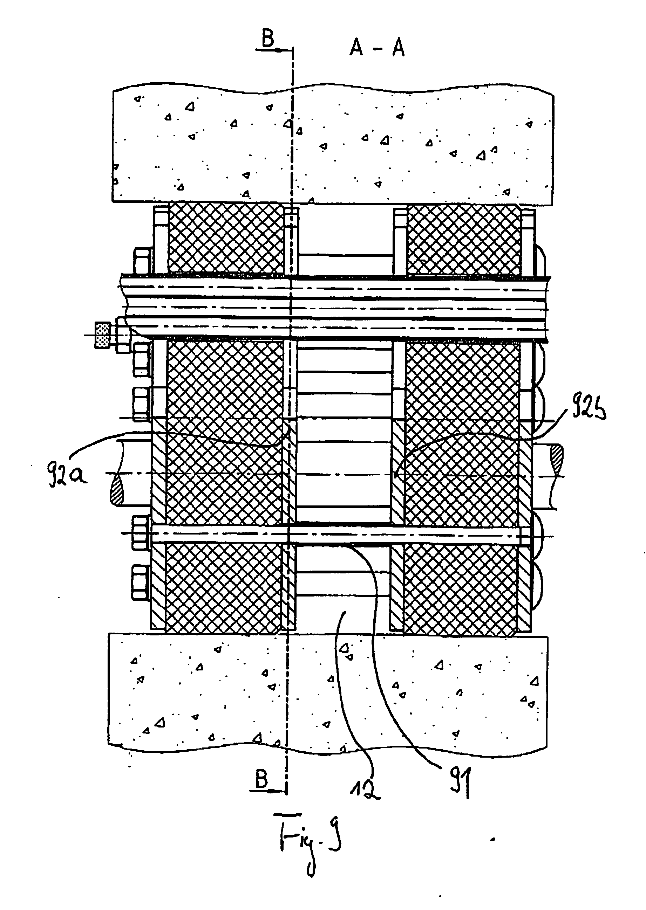

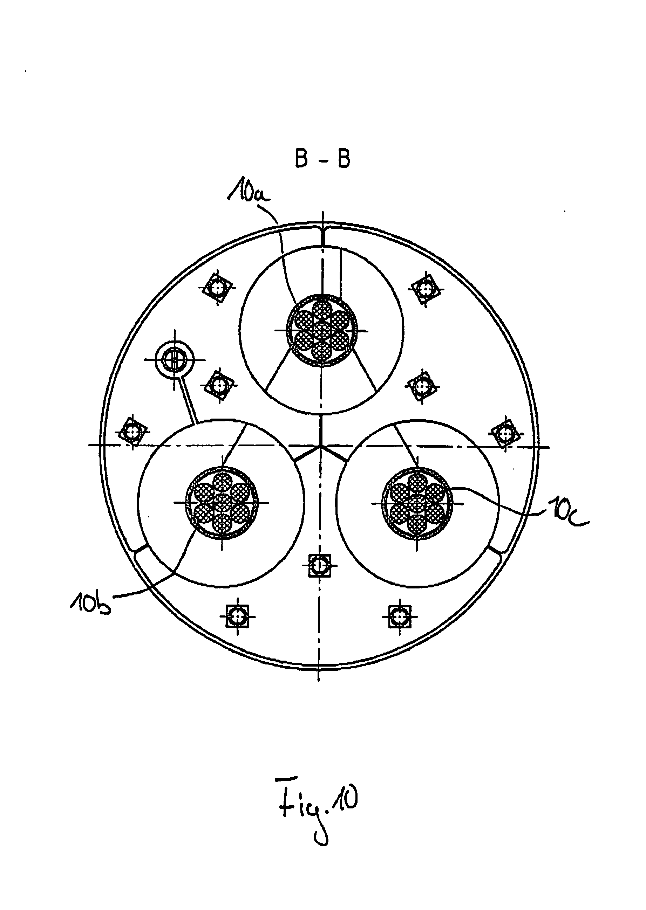

Figur 9 zeigt eine Leitungsdurchführung 1, bei welcher das Prüfvolumen 12 durch auf die Spannbolzen 6 gesetzte Hülsen 91 vergrößert ist; die Hülsen 91 grenzen an jeweils großflächig an den Elastomerkörperteilen 4a, b anliegende Anlageplatten 92. Die Anlageplatten 92 entsprechen von einer Ansenkung zur Aufnahme eines komplementären, gegenüber der übrigen Hülse dünnwandiger ausgebildeten endseitigen Hülsenabschnitts abgesehen den Spannplatten 5a, b bzw. der Zwischenplatte 11. Ferner ist in der Abstandsplatte 92a eine den Ventilkörper 15 druckfluidisch mit dem Prüfvolumen 12 verbindende Durchgangsöffnung vorgesehen, welche die anhand von Figur 4 erläuterte Durchgangsöffnung 41 im Elastomerkörperteil 4b verlängert. Insofern kann die Anlageplatte 92a von der anhand von Figur 5 erläuterten Zwischenplatte 11 ausgehend hergestellt werden, was auch der in Figur 10 gezeigte Schnitt durch die Abstandsplatte 92a mit senkrecht zur Leitungsrichtung 2 liegender Schnittebene illustriert.

Gleichermaßen kann die Abstandsplatte 92b von einer Spannplatte 5a, b ausgehend hergestellt werden, wozu die für die Spannbolzen 6 vorgesehenen Durchgangsöffnungen zur Aufnahme der Hülsen 91 anzusenken sind. Es kann also vorteilhafter weise von einigen Grundkörpern ausgehend durch gegebenenfalls geringfügige Anpassungen eine Mehrzahl unterschiedlicher Leitungsdurchführungen 1 realisiert werden, etwa Leitungsdurchführungen 1 mit nur durch eine Zwischenplatte 11 gebildeten Prüfvolumina 12 ebenso wie Leitungsdurchführungen 1, deren Prüfvolumina 12 durch Hülsen 91 vergrößert sind.

## Patentansprüche

1. Leitungsdurchführung (1) zum Aufbauen eines dichtenden Verschlusses einer von einer Leitung (10a, b, c) durchsetzten Öffnung in einer Wand (3) mit
einem Elastomerkörper (4a, b), in dem eine in Leitungsrichtung (2) orientierte, sich von der Leitung weg nach außen bis zu einer Außenfläche des Elastomerkörpers (4a, b) erstreckende Trennfläche (22) vorgesehen ist,
einer Spanneinrichtung (5a, b; 6a, b; 7) zum Verspannen des Elastomerkörpers, welche beidseits des Elastomerkörpers (4a, b) vorgesehene Spannplatten (5a, b) aufweist, die dazu ausgelegt sind, den Elastomerkörper (4a, b) in Leitungsrichtung (2) zu komprimieren, sodass dieser infolge des Verspannens, also der Kompression, senkrecht zur Leitungsrichtung (2) expandiert und sich dichtend an die Leitung (10a, b, c) anlegt,
und mit einem Abstandshalter, der als sich quer zur Leitungsrichtung (2) erstreckende Zwischenplatte (11), deren Ausdehnung in einer den Abstand zur Mittenachse der Leitung bestimmenden Richtung größer als in Leitungsrichtung (2) ist, mit einer die Leitung berücksichtigenden Durchgangsöffnung vorgesehen ist und der dazu ausgelegt ist, an den verspannten Elastomerkörper grenzend ein Prüfvolumen (12) in dessen Inneren freizuhalten, welches Prüfvolumen (12) über einen Ventilkörper (15) druckbeaufschlagbar ist,
wobei in der Zwischenplatte (11) eine Trennfuge (51) vorgesehen ist, die einen von der Leitung (10a, b, c) begrenzten Bereich des Prüfvolumens (12) druckfluidisch mit einem von der Laibung (9) der Wandöffnung begrenzten Bereich des Prüfvolumens (12) verbindet,
**dadurch gekennzeichnet, dass**
die Spannplatten (5a, b) der Trennfläche (22) im Elastomerkörper (4a, b) entsprechend geteilt ausgeführt sind und auch die Trennfuge (51) in der Zwischenplatte (11) der Trennfläche (22) im Elastomerkörper (4a, b) entsprechend vorgesehen ist, sodass die Leitungsdurchführung (1) ohne Demontage der Spannplatten (5a, b) auf eine bereits verlegte Leitung (10a, b, c) gesetzt werden kann.

2. Leitungsdurchführung (1) nach Anspruch 1, bei welcher der Elastomerkörper (4a, b) in Bezug auf die Leitungsrichtung (2) aus mindestens zwei für sich einstückigen Elastomerkörperteilen (4a, b) aufgebaut ist, die dazu ausgelegt sind, zwischen sich zumindest einen Bereich des Prüfvolumens (12) einzuschließen.

3. Leitungsdurchführung (1) nach Anspruch 2, bei welcher für den Abstandshalter (11; 91) ein anderes Material als für den Elastomerkörper (4a, b) vorgesehen ist.

4. Leitungsdurchführung (1) nach einem der vorstehenden Ansprüche, bei welcher der Abstandshalter (91) eine Hülse (91) aufweist, die auf einen den Elastomerkörper (10a, b, c) durchsetzenden und mit einer Spannplatte (5a, b) zum Zwecke des Verspannens des Elastomerkörpers (10a, b, c) zusammenwirkenden Spannbolzen (6) gesetzt ist.

5. Leitungsdurchführung (1) nach einem der vorstehenden Ansprüche, bei welcher der Ventilkörper (15) an einer der Spannplatten (5a, b) befestigbar, vorzugsweise befestigt, ist und so gemeinsam mit der Spannplatte (5a, b) an den Elastomerkörper (4a, b) angesetzt werden kann.

6. Leitungsdurchführung (1) nach einem der vorstehenden Ansprüche, bei welcher sich der Ventilkörper (15) in dem Elastomerkörper (4a, b) über höchstens 50 % des Abstands zwischen einer der Spannplatten (5a, b) und dem Prüfvolumen (12) erstreckt.

7. Verfahren zur Herstellung einer Leitungsdurchführung (1) zum Aufbauen eines dichtenden Verschlusses einer von einer Leitung (10a, b, c) durchsetzten Öffnung in einer Wand (3) mit den Schritten:
- Vorsehen eines Elastomerkörpers (4a, b), in dem eine in Leitungsrichtung (2) orientierte, sich von der Leitung (10a, b, c) weg nach außen bis zu einer Außenfläche des Elastomerkörpers (4a, b) erstreckende Trennfläche (22) vorgesehen ist;
- Ansetzen eines Abstandshalters (11; 91) in Anlage an den Elastomer körper (4a, b), welcher Abstandshalter (11; 91) als sich quer zur Leitungsrichtung (2) erstreckende Zwischenplatte (11), deren Ausdehnung in einer den Abstand zur Mittenachse der Leitung bestimmenden Richtung größer als in Leitungsrichtung (2) ist, mit einer die Leitung berücksichtigenden Durchgangsöffnung vorgesehen ist und dazu ausgelegt ist, ein Prüfvolumen (12) im Inneren des verspannten Elastomerkörpers (4a, b) freizuhalten, wobei in der Zwischenplatte (11) eine Trennfuge (51) vorgesehen ist, die einen von der Leitung (10a, b, c) begrenzten Bereich des Prüfvolumens (12) druckfluidisch mit einem von der Laibung (9) der Wandöffnung begrenzten Bereich des Prüfvolumens (12) verbindet;
- Ansetzen einer Spanneinrichtung (5a, b; 6a, b; 7) zum Verspannen des Elastomerkörpers (4a, b), welche beidseits des Elastomerkörpers (4a, b) vorgesehene Spannplatten (5a,b) aufweist, die dazu ausgelegt sind, den Elastomerkörper (4a, b) in Leitungsrichtung (2) zu komprimieren, sodass dieser infolge des Verspannens, also der Kompression, senkrecht zur Leitungsrichtung (2) expandiert und sich dichtend an die Leitung (10a, b, c) anlegen kann,
wobei die Spannplatten (5a, b) der Trennfläche (22) im Elastomerkörper (4a,b) entsprechend geteilt ausgeführt sind und auch die Trennfuge (51) in der Zwischenplatte (11) der Trennfläche (22) im Elastomerkörper (4a, b) entsprechend vorgesehen ist, sodass die Leitungsdurchführung (1) ohne Demontage der Spannplatten (5a, b) auf eine bereits verlegte Leitung (10a, b, c) gesetzt werden kann.

8. Verwendung einer Leitungsdurchführung (1) nach einem der Ansprüche 1 bis 6 zum Abdichten einer Strom-, Gas-, Wasser-, Wärme-, Telekommunikations-, Signal-, oder Datenleitung in einer Gebäudewand, Schiffswand oder Gehäusewand.

9. Verwendung nach Anspruch 8, wobei die Leitungsdurchführung (1) von nur einer Seite der Wand (3) aus montiert wird und die Druckbeaufschlagung von derselben Seite der Wand (3) aus erfolgt.

## Claims

1. A conduit duct (1) for providing a sealed closure of an opening in a wall (3), penetrated by a convey (10a, b, c), having
an elastomer body (4a, b) in which in a separating area (22) oriented in a conduit direction (2) and extending away from said conduit up to an outer at surface of said elastomer body (4a, b) is provided,
a tensioning device (5a, b; 6a, b; 7) for tensioning said elastomer body, which comprises tensioning plates (5a, b) provided on both sides of said elastomer body (4a, b), which are adapted for compressing said elastomer body (4a, b) in said conduit direction (2) so that said elastomer body expands due to said tensioning, namely said compression, perpendicularly to said conduit direction (2) and contacts said conduit (10a, b, c) sealingly,
and a spacer which is provided as an intermediate plate (11) extending obliquely to said conduit direction (2), said intermediate plate having in a direction which defines the distance from a central axis of said conduit a larger size than in said conduit direction (2), said spacer having a through opening for said conduit and being, while contacting said elastomer body tensioned, adapted for defining a test volume (12) inside of said elastomer body, which test volume (12) can be pressurized via a valve element (15),
wherein a separating gap (51) is provided in said intermediate plate (11), which fluidically connects a region of said test volume (12), which is defined by said conduit (10a, b, c), with a region of said test volume (12), which is defined by a soffit (9) of said wall opening,
**characterized in that**
said tensioning plates (5a, b) are parted corresponding to said separating area (22) in said elastomer body (4a, b) and also said separating gap (51) in said intermediate plate (11) is provided corresponding to said separating area (22) in said elastomer body (4a, b) so that said conduit duct (1) can be placed on a conduit (10a, b, c) installed primarily, namely be placed without a disassembly of said tensioning plates (5a, b).

2. The conduit duct (1) according to claim 1, wherein said elastomer body (4a, b) is, with respect said conduit direction (2), provided of at least two elastomer body parts (4a, b) being integral respectably, which are adapted for enclosing at least a part of said test volume (12) in between each other.

3. The conduit duct (1) according to claim 2, wherein said spacer (11; 91) is made of another material than said elastomer body (4a, b).

4. The conduit duct (1) according to one of the preceding claims, wherein said spacer (91) comprises a sleeve (91) which is placed upon a tensioning bolt (6) which extends through said elastomer body (10a, b, c) and interacts with a tensioning plate (5a, b), namely for said tensioning of said elastomer body (10a, b, c).

5. The conduit duct (1) according to one of preceding claims, wherein said valve element (15) can be mounted, preferably is mounted, at one of said tensioning plates (5a, b) and can be placed at said elastomer body (4a, b) together with said tensioning plate (5a, b), thus.

6. The conduit duct (1) according to one of preceding claims, wherein said valve element (15) extends in said elastomer body (4a, b) over a length of not more than 50 % of a distance between one said tensioning plates (5a, b) and said test volume (12).

7. A method for manufacturing a conduit duct (1) for providing a sealed closure of an opening in a wall (3), penetrated by a convey (10a, b, c), comprising the steps:
- Providing an elastomer body (4a, b) in which a separating area (22) oriented in a conduit direction (2) and extending away from said conduit (10a, b, c) up to an outer surface of said elastomer body (4a, b) is provided;
- Placing a spacer (11; 91) in contact to said elastomer body (4a, b), which spacer (11; 91) is provided as an intermediate plate (11) extending obliquely to said conduit direction (2), said intermediate plate having in a direction which defines the distance from a central axis of said convey a larger size than in said conduit direction (2), said spacer having a through opening for said conduit and being, while contacting said elastomer body tensioned, adapted for defining a test volume (12) inside of said elastomer body, which test volume (12) can be pressurized via a valve element (15), wherein a separating gap (51) is provided in said intermediate plate (11), which fluidically connects a region of said test volume (12), which is defined by said conduit (10a, b, c), with a region of said test volume (12), which is defined by a soffit (9) of said wall opening;
- Placing a tensioning device (5a, b; 6a, b; 7) for tensioning said elastomer body (4a, b), which comprises tensioning plates (5a, b) provided on both sides of said elastomer body (4a, b), which are adapted for compressing said elastomer body (4a, b) in said conduit direction (2) so that said elastomer body expands due to said tensioning, namely said compression, perpendicularly to said conduit direction (2) and contacts said convey (10a, b, c) sealingly,
wherein said tensioning plates (5a, b) are parted corresponding to said separating area (22) in said elastomer body (4a, b) and also said separating gap (51) in said intermediate plate (11) is provided corresponding to said separating area (22) in said elastomer body (4a, b) so that said conduit duct (1) can be placed on a conduit (10a, b, c) installed primarily, namely be placed without a disassembly of said tensioning plates (5a, b).

8. A use of a conduit duct (1) according to one of claims 1 to 6 for sealing a power line, a gas line, a water line, a heating pipe, a telecommunications line, a signal line or a data line in a wall of a building, a ship or a housing.

9. The use according to claim 8, wherein said conduit duct (1) is mounted from one side of said wall (3) only, wherein said pressurizing is performed from the same side of said wall (3).

## Revendications

1. Passage de conduite ou de câble (1) pour la constitution d'une fermeture étanche d'une ouverture traversée par une conduite ou un câble (10a, b, c) réalisée dans une paroi (3), comportant
un corps élastomère (4a, b), dans lequel est prévue une surface de séparation (22) qui est orientée dans la direction de la conduite ou du câble (2) et qui s'étend à partir de la conduite ou du câble vers l'extérieur jusqu'à une surface extérieure du corps élastomère (4a, b),
un dispositif de serrage (5a, b ; 6a, b ; 7) pour le serrage du corps élastomère, lequel présente des plaques de serrage (5a, b) qui sont prévues de part et d'autre du corps élastomère (4a, b) et sont conçues pour comprimer le corps élastomère (4a, b) dans la direction de la conduite ou du câble (2) de manière que ce corps subisse une expansion perpendiculairement à la direction de la conduite ou du câble (2) suite au serrage, donc à la compression, en épousant intimement la conduite ou le câble (10a, b, c),
et un espaceur qui est prévu, avec une ouverture de passage tenant compte de la conduite ou du câble, sous la forme d'une plaque intermédiaire (11) qui s'étend transversalement à la direction de la conduite ou du câble (2) et dont l'étendue dans une direction définissant l'écart par rapport à l'axe médian de la conduite ou du câble est plus importante que dans la direction de la conduite ou du câble (2), lequel espaceur est conçu pour réserver, de manière contiguë au corps élastomère à l'état serré, un volume de contrôle (12) dans l'intérieur de ce dernier, lequel volume de contrôle (12) peut être pressurisé par le biais d'un corps de vanne (15),
dans lequel il est prévu, dans la plaque intermédiaire (11), un plan de joint (51) qui relie par du fluide sous pression une zone du volume de contrôle (12) délimitée par la conduite ou le câble (10a, b, c) à une zone du volume de contrôle (12) délimitée par l'intrados (9) de l'ouverture de paroi,
**caractérisé en ce que**
les plaques de serrage (5a, b) sont conçues en étant divisées conformément à la surface de séparation (22) dans le corps élastomère (4a, b) et, de même, le plan de joint (51) dans la plaque intermédiaire (11) est prévu conformément à la surface de séparation (22) dans le corps élastomère (4a, b) de manière que le passage de conduite ou de câble (1) puisse être mis en place sur une conduite ou un câble (10a, b, c) déjà posé(e) sans devoir démonter les plaques de serrage (5a, b).

2. Passage de conduite ou de câble (1) selon la revendication 1, dans lequel le corps élastomère (4a, b), en référence à la direction de la conduite ou du câble (2), est constitué par au moins deux parties de corps élastomère (4a, b) unitaires en soi qui sont conçues pour contenir entre elles au moins une zone du volume de contrôle (12).

3. Passage de conduite ou de câble (1) selon la revendication 2, dans lequel il est prévu, pour l'espaceur (11 ; 91), une autre matière que pour le corps élastomère (4a, b).

4. Passage de conduite ou de câble (1) selon l'une des revendications précédentes, dans lequel l'espaceur (91) présente un manchon (91) qui est placé sur un boulon de serrage (6) traversant le corps élastomère (10a, b, c) et coopérant avec une plaque de serrage (5a, b) pour effectuer le serrage du corps élastomère (10a, b, c).

5. Passage de conduite ou de câble (1) selon l'une des revendications précédentes, dans lequel le corps de vanne (15) peut être fixé, et de préférence est fixé, à l'une des plaques de serrage (5a, b) et peut ainsi être mis en place sur le corps élastomère (4a, b) conjointement avec la plaque de serrage (5a, b).

6. Passage de conduite ou de câble (1) selon l'une des revendications précédentes, dans lequel le corps de vanne (15) s'étend dans le corps élastomère (4a, b) sur, au maximum, 50 % de l'écart entre la plaque de serrage (5a, b) et le volume de contrôle (12).

7. Procédé de production d'un passage de conduite ou de câble (1) pour la constitution d'une fermeture étanche d'une ouverture traversée par une conduite ou un câble (10a, b, c) réalisée dans une paroi (3), comportant les étapes consistant à :
- prévoir un corps élastomère (4a, b), dans lequel est prévue une surface de séparation (22) qui est orientée dans la direction de la conduite ou du câble (2) et qui s'étend à partir de la conduite ou du câble (10a, b, c) vers l'extérieur jusqu'à une surface extérieure du corps élastomère (4a, b) ;
- mettre en place un espaceur (11 ; 91) en contact avec le corps élastomère (4a, b), lequel espaceur (11 ; 91) est prévu, avec une ouverture de passage tenant compte de la conduite ou du câble, sous la forme d'une plaque intermédiaire (11) qui s'étend transversalement à la direction de la conduite ou du câble (2) et dont l'étendue dans une direction définissant l'écart par rapport à l'axe médian de la conduite ou du câble est plus importante que dans la direction de la conduite ou du câble (2), lequel espaceur est conçu pour réserver, de manière contiguë au corps élastomère (4a, b) à l'état serré, un volume de contrôle (12) dans l'intérieur de ce dernier, en sachant qu'il est prévu, dans la plaque intermédiaire (11), un plan de joint (51) qui relie par du fluide sous pression une zone du volume de contrôle (12) délimitée par la conduite ou le câble (10a, b, c) à une zone du volume de contrôle (12) délimitée par l'intrados (9) de l'ouverture de paroi ;
- mettre en place un dispositif de serrage (5a, b ; 6a, b ; 7) pour le serrage du corps élastomère (4a, b), lequel présente des plaques de serrage (5a, b) qui sont prévues de part et d'autre du corps élastomère (4a, b) et sont conçues pour comprimer le corps élastomère (4a, b) dans la direction de la conduite ou du câble (2) de manière que ce corps subisse une expansion perpendiculairement à la direction de la conduite ou du câble (2) suite au serrage, donc à la compression, en épousant intimement la conduite ou le câble (10a, b, c),
dans lequel les plaques de serrage (5a, b) sont conçues en étant divisées conformément à la surface de séparation (22) dans le corps élastomère (4a, b) et, de même, le plan de joint (51) dans la plaque intermédiaire (11) est prévu conformément à la surface de séparation (22) dans le corps élastomère (4a, b) de manière que le passage de conduite ou de câble (1) puisse être mis en place sur une conduite ou un câble (10a, b, c) déjà posé(e) sans devoir démonter les plaques de serrage (5a, b).

8. Utilisation d'un passage de conduite ou de câble (1) selon l'une des revendications 1 à 6 pour étancher une conduite de gaz, une conduite d'eau, une conduite thermique, un câble électrique ou un câble de télécommunication, de transmission de signaux ou de données dans la paroi d'un bâtiment, d'un navire ou d'un boîtier.

9. Utilisation selon la revendication 8, dans laquelle le passage de conduite ou de câble (1) n'est monté que depuis un côté de la paroi (3) et la pressurisation s'effectue depuis ce même côté de la paroi (3).
